# EUROPÄISCHE PATENTSCHRIFT

(11) **EP 4 359 230 B1**
(45) Veröffentlichungstag und Bekanntmachung des Hinweises auf die Patenterteilung: **12.03.2025**
(21) Anmeldenummer: 21844192.1
(22) Anmeldetag: 17.12.2021
(51) Int. Cl.: B60C 13/00

(54) **FAHRZEUGLUFTREIFEN**
PNEUMATIC TYRE FOR A VEHICLE
PNEUMATIQUE POUR VÉHICULE

(30) Priorität: 24.06.2021 DE 102021206548
(43) Veröffentlichungstag der Anmeldung: 01.05.2024
(73) Patentinhaber: Continental Reifen Deutschland GmbH, 30175 Hannover (DE)
(72) Erfinder: HOJAS PUNZANO, Ines, 30165 Hannover (DE); KUNIAK, Lubos, 30165 Hannover (DE); PANG-JIAN-XIANG, Edwin, 30165 Hannover (DE)
(74) Vertreter: Continental Corporation
(86) Internationale Anmeldenummer: PCT/DE2021/200268
(87) Internationale Veröffentlichungsnummer: WO 2022/268241

(56) Entgegenhaltungen:
- EP-A1- 3 213 936
- EP-B1- 3 213 934
- US-A1- 2016 361 955

## Beschreibung

Die Erfindung betrifft einen Fahrzeugluftreifen mit Seitenwänden mit einem auf zumindest einer Seitenwand ausgebildeten, dekorierenden, beispielsweise bildhaft gestalteten Muster, welches sich über einen Umfangsabschnitt der Seitenwand erstreckt und schachbrettartig angeordnet zwei Arten von rechteckigen Musterfeldern aufweist, welche in nebeneinander und weitgehend zueinander parallel angeordneten, weitgehend gerade verlaufenden und konstant breiten Reihen verlaufen und innerhalb der Reihen einander abwechseln, wobei die Musterfelder in nebeneinander verlaufenden Reihen gegeneinander versetzt sind, sodass ein Musterfeld der einen Art in der einen Reihe einem Musterfeld der anderen Art in der benachbarten Reihe zugeordnet ist, wobei in den Musterfeldern jeweils eine Mikrorippe, insbesondere mäander- oder rechteckwellenförmig verlaufend, ausgebildet ist und sich die beiden Arten von Musterfeldern durch den Verlauf der Mikrorippen voneinander unterscheiden.

Zur Herstellung von Mustern aus Mikrorippen auf den Seitenwänden von Reifen werden üblicherweise in den Seitenschalen der Vulkanisationsform der Reifen das Muster nachbildende Vertiefungen softwaregesteuert eingefräst, sodass im Gummimaterial der Seitenwände bei der Vulkanisation der Reifen Erhebungen bzw. Mikrorippen ausgebildet werden. Darüber sollen die gefrästen Vertiefungen das Ausbilden von möglichst klein dimensionierten Mikrorippen mit geringen gegenseitigen Abständen sicherstellen, sodass eine gute Sichtbarkeit des Musters durch Reflexion bzw. Streuung von einfallendem Licht gewährleistet ist.

Ein Fahrzeugluftreifen der eingangs genannten Art ist beispielsweise aus der EP 3 213 934 B1 bekannt. Das über einen Umfangsabschnitt der Seitenwand ausgebildete Muster setzt sich aus in Reihen angeordneten Musterfeldern zusammen, welche jeweils mit einer in Rechteckschleifen verlaufenden Mikrorippe strukturiert sind. Bei jeweils zwei der in Reihen verlaufenden Musterfeldern sind die Mikrorippen miteinander verbunden. Darüber hinaus sind in den Musterfeldern weitere, separate Schleifen bildende schmälere Mikrorippen vorhanden. Die Herstellung dieses Musters auf den Seitenwänden der Reifen erfordert in den Seitenschalen der Vulkanisationsform der Reifen komplexe und zeitintensiven Fräsarbeiten.

Die US 2016/0361955 A1 offenbart einen Fahrzeugluftreifen mit Seitenwänden mit dekorierenden Mustern, welche sich über einen Umfangsabschnitt der jeweiligen Seitenwand erstrecken. Die Muster weisen zwei Arten von Musterfeldern auf, welche in nebeneinander verlaufenden Reihen angeordnet sind und innerhalb der Reihen einander abwechseln, wobei die Musterfelder in nebeneinander verlaufenden Reihen gegeneinander versetzt sind. Die Musterfelder umfassen je eine Mikrorippe, wobei die Mikrorippe in den Musterfeldern der ersten Art jeweils mäanderförmig verläuft und die Mikrorippe in Musterfeldern der zweiten Art Mikrorippen aus den benachbarten Musterfeldern der ersten Art miteinander verbindet, sodass ein über die komplette Reihe durchgehender Mikrorippenzug gebildet ist. Der Mikrorippenzug soll gut sichtbar sein und eine hohe Rissbeständigkeit aufweisen. Ferner soll die Fräszeit für das korrespondierende Negativ an der Seitenschale reduziert sein.

Aus der EP 3 213 936 A1 ist ein Fahrzeugluftreifen mit Seitenwänden mit einem auf zumindest einer Seitenwand ausgebildeten, dekorierenden Muster bekannt, welches sich über einen Umfangsabschnitt der Seitenwand erstreckt und schachbrettartig angeordnet zwei Arten von rechteckigen Musterfeldern aufweist. Gemäß einem Ausführungsbeispiel sind die Musterfelder derart abwechselnd in Reihen ausgebildet, dass die Musterfelder in nebeneinander verlaufenden Reihen gegeneinander versetzt sind. Innerhalb der Musterfelder sind jeweils mehrere parallel zueinander sowie gewellt verlaufende Mikrorippen vorgesehen, wobei die Mikrorippen in den Musterfeldern erster Art zu den Mikrorippen in den Musterfeldern zweiter Art um 90° verdreht orientiert sind. Gemäß einem weiteren Ausführungsbeispiel verlaufen die Mikrorippen jeweils rechteckwellenförmig. Das Muster soll das äußere Erscheinungsbild der Seitenwand verbessern.

Der Erfindung liegt die Aufgabe zugrunde, ein Muster der eingangs genannten Art derart zu gestalten, dass in der Seitenschale der Vulkanisationsform die Fräszeit deutlich reduziert und der Fräsvorgang vereinfacht werden können, wobei das in der Seitenwand ausgebildete Muster gut sichtbar bleiben soll und in unterschiedlichen, auch bildlichen Ausgestaltungen ausführbar sein soll.

Gelöst wird die gestellte Aufgabe erfindungsgemäß dadurch, dass zur Bildung des Musters innerhalb von Reihen am Platz eines Musterfeldes oder mehrerer Musterfelder jeweils ein den innerhalb einer Reihe vorgesehenen abwechselnden Verlauf der zwei Arten von rechteckigen Musterfeldern unterbrechendes Leerfeld mit unstrukturierter bzw. glatter Außenfläche enthalten ist, wobei ausschließlich die Mikrorippen von innerhalb einer Reihe unmittelbar aufeinanderfolgenden Musterfeldern einen durchgehenden Mikrorippenzug bildend miteinander verbunden sind.

Die Erfindung gestattet eine variable, sehr ansprechende und insbesondere auch bildliche Gestaltung eines Musters auf einer Seitenwand eines Fahrzeugluftreifens, indem an entsprechenden Stellen der vorgesehenen Gestaltung von Mikrorippen freie Musterfelder, hier als Leerfelder bezeichnet, vorhanden sind. Die innerhalb einer Reihe vorgesehene abwechselnde Aufeinanderfolge der beiden Arten von Musterfeldern mit unterschiedlichem Verlauf der Mikrorippen bleibt über die Erstreckung der Reihe im Muster "erhalten" und wird durch die Leerfelder lediglich unterbrochen. Die Mikrorippen sämtlicher innerhalb einer Reihe aufeinanderfolgender Musterfelder sind miteinander verbunden. Dadurch wird in den Seitenschalen der Vulkanisationsform der softwaregesteuerte Fräsvorgang wesentlich vereinfacht und es wird die Fräszeit deutlich reduziert.

Das Muster wird vor allem durch die Musterfelder und durch die innerhalb der Musterfelder verlaufenden Mikrorippen geprägt. Um den Musterfeldern eine gute Sichtbarkeit auf der Seitenwand zu verleihen, ist es von Vorteil, wenn die in einer Reihe einander benachbarten Musterfelder jeweils einen Randbereich mit einer Mindestbreite von 0,10 mm aufweist, wobei diese Randbereiche von einem Mikrorippenabschnitt durchquert sind, der die Mikrorippen der in einer Reihe benachbarten Musterfelder miteinander verbindet, wobei die Randbereiche ansonsten frei von Mikrorippen sind.

Nahezu beliebige Ausgestaltungen des Musters lassen sich dadurch erzielen, dass innerhalb der Reihen Leerfelder und Musterfelder entsprechend abwechseln. Besonders gut sichtbare Muster lassen sich mit einer Ausführung erreichen, bei welcher die Mikrorippen in den Musterfeldern, den innerhalb des Randbereiches zur Verfügung stehenden Flächenbereich ausnützend, mäander- oder rechteckwellenförmig verlaufen.

Weitere Maßnahmen unterstützen eine besonders gut sichtbare und ästhetische Ausgestaltung des Musters. Bei einer dieser Maßnahmen weisen die innerhalb des Musters vorgesehenen Musterfelder jeder der beiden Arten von Musterfeldern untereinander jeweils übereinstimmende Abmessungen auf. Dabei können innerhalb des Musters sämtliche Musterfelder übereinstimmende Abmessungen, vorzugsweise in der Form von Quadraten, besitzen.

Eine weitere Maßnahme, die zu einer guten Sichtbarkeit der Mikrorippen innerhalb der Musterfelder beiträgt, besteht darin, dass die Musterfelder eine Größe im Bereich von 3,00 mm x 3,00 mm bis 9,00 mm x 9,00 mm aufweisen.

Besonders harmonisch wirkende Ausgestaltungen des Musters lassen sich dadurch erstellen, wenn innerhalb des Musters die Reihen mit den Musterfeldern in Umfangsrichtung oder in radialer Richtung der Seitenwand verlaufen.

Auch die Dimensionierung der Mikrorippen spielt für eine gute Sichtbarkeit des Musters auf der Seitenwand des Reifens eine gewisse Rolle. Besonders vorteilhaft ist dabei eine Ausgestaltung der Mikrorippen als im Querschnitt kuppelförmig, wobei die Mikrorippen eine maximale Höhe sowie eine Breite an ihrer Basis von 0,20 mm bis 0,40 mm aufweisen. Diesbezüglich ist es auch von Vorteil, wenn sämtliche Musterfälle innerhalb eines Musters Mikrorippen gleicher Gestaltung und Abmessungen besitzen.

Weitere Merkmale, Vorteile und Einzelheiten der Erfindung werden nun anhand der schematischen Zeichnung, die Ausführungsbeispiele darstellt, näher beschrieben. Dabei zeigen
Fig. 1 eine Draufsicht auf einen Umfangsabschnitt einer Seitenwand eines Fahrzeugluftreifens mit einer ersten Ausführungsvariante eines Musters gemäß der Erfindung,
Fig. 2 einen vergrößerten Ausschnitt des Musters aus Fig. 1,
Fig. 3 ein vergrößertes Detail der Fig. 2,
Fig. 4 einen vergrößerten Ausschnitt einer zweiten Variante eines Musters und
Fig. 5 ein vergrößertes Detail der Fig. 4.

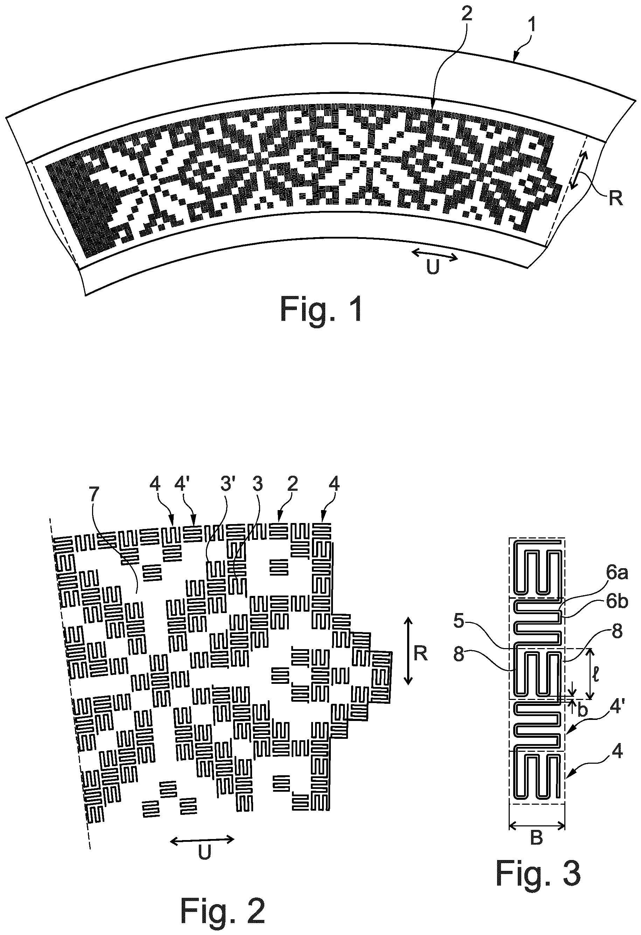

Fig. 1 zeigt einen Umfangsabschnitt einer Seitenwand 1 eines Fahrzeugluftreifens mit einer Variante eines dekorierenden Musters 2, welches innerhalb eines Kreisringabschnittes, daher über einen Teilbereich des ebenfalls kreisringförmigen Umfanges der Seitenwand 1, ausgebildet ist. Der Pfeil R kennzeichnet in den Figuren die radiale Richtung, der Pfeil U die Umfangsrichtung des Reifens.

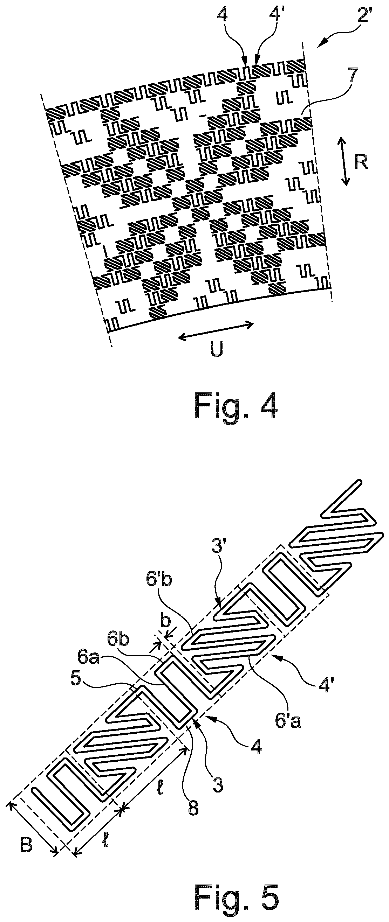

Die insbesondere in Fig. 2 und Fig. 4 gezeigten Ausschnitte von Ausführungsvarianten eines Musters 2, 2' weisen eine bildhafte Ausgestaltung auf. Die Muster 2, 2' sind von Mikrorippen 3, 3' (Fig. 1 bis Fig. 5) geprägt und basieren auf schachbrettartig verlaufenden bzw. angeordneten, in Draufsicht rechteckigen Musterfeldern 4, 4', welche in nebeneinander, weitgehend parallel und gerade verlaufenden sowie konstant und übereinstimmend breiten Reihen angeordnet sind. Die Begriffe "weitgehend parallel und gerade" beziehen sich darauf, dass infolge der Kreisringgestalt und Wölbung der Seitenwand die Reihen von Musterfeldern 4, 4', die in den Beispielen in radialer Richtung (Fig. 1, Fig. 2) oder in Umfangsrichtung (Fig. 4) verlaufen, nicht exakt parallel und gerade verlaufen. Innerhalb der Muster 2, 2' sind Reihen mit Leerfeldern 7 (Fig. 2, Fig. 4) - ohne Mikrorippen und anstelle von Musterfeldern mit Mikrorippen - vorhanden, wie noch beschrieben wird. Die Leerfelder 7 weisen vorzugsweise eine unstrukturierte, glatte oder weitgehend glatte Oberfläche auf. Die Kombination aus Musterfeldern 4, 4' mit Leerfeldern 7 ergibt das gewünschte Gesamtbild der Muster 2, 2'.

Innerhalb der Muster 2, 2' sind die Mikrorippen 3, 3' gleich gestaltet und weisen einen im Wesentlichen gleichmäßig kuppelförmigen Querschnitt mit einer maximalen, mittigen Höhe von 0,20 mm bis 0,40 mm und einer Breite an ihrer Basis von ebenfalls 0,20 mm bis 0,40 mm auf.

Die Musterfelder 4, 4' weisen eine der Breite B (Fig. 3, Fig.5) der Reihen entsprechende Breite auf, die 3,00 mm bis 9,00 mm beträgt. In der Erstreckungsrichtung der Reihen weisen die Musterfelder 4, 4' eine Länge 1 (Fig. 3, Fig. 5) auf, die ebenfalls 3,00 mm bis 9,00 mm beträgt. Bei der in Fig. 1 bis Fig. 3 gezeigten Ausführung sind sämtliche Musterfelder 4, 4' gleich groß und quadratisch. Bei der in Fig. 4 und Fig. 5 gezeigten Ausführung sind die Musterfelder 4, 4' unterschiedlich lang, sämtliche Musterfelder 4 und sämtliche Musterfelder 4' untereinander jedoch gleich groß.

Die Musterfelder 4, 4' unterscheiden sich hinsichtlich des Verlaufs der in ihnen ausgebildeten Mikrorippen 3, 3'. Dabei wechselt in jeder Reihe bei unmittelbar aufeinanderfolgenden Musterfeldern 4, 4' jeweils ein Musterfeld 4 mit einem Musterfeld 4' ab. Vorgesehene Leerfelder 7 unterbrechen lediglich den ansonsten vorgesehenen abwechselnden Verlauf. In innerhalb einer Reihe aufeinanderfolgender Musterfeldern 4, 4' sind deren Mikrorippen 3, 3' miteinander verbunden und bilden einen durchgehenden Mikrorippenzug. Das Muster 2, 2' kann Reihen aufweisen, die komplett aus abwechselnd aufeinander folgenden Musterfeldern 4, 4' bestehen, deren Mikrorippen 3, 3' sämtlich miteinander verbunden sind. In Reihen mit Leerfeldern 7 unterbrechen diese wie erwähnt die abwechselnde Aufeinanderfolge und nehmen den Platz/die Plätze der ansonsten vorgesehenen Musterfelder 4, 4' ein. Das Muster 2, 2 weist in Reihen auch einzelne, zwischen Leerfeldern 7 befindliche Musterfelder 4, 4' und Gruppen mit zwei oder mehr aufeinander folgenden Musterfeldern 4, 4' auf.

Jedes Musterfeld 4, 4' weist ferner einen umlaufenden Randbereich 8 mit einer Mindestbreite b von 0,10 mm auf, beispielsweise eine Breite bis zu 0,40 mm, und einen innerhalb des Randbereiches 8 befindlichen Flächenbereich auf, innerhalb welchem die jeweilige Mikrorippe 3, 3', vorzugsweise den Flächenbereich ausnützend, mäander- oder rechteckwellenförmig verlaufend ausgebildet ist. Den Randbereich 8 quert ein Mikrorippenabschnitt 5, welcher die Mikrorippen 3, 3' von in den Reihen aufeinander folgenden Musterfeldern 4, 4' miteinander verbindet. Ansonsten sind die Randbereiche 8 unstrukturiert.

In den einander benachbarten bzw. nebeneinander verlaufenden Reihen sind die Musterfelder 4, 4' gegeneinander in Erstreckungsrichtung der Reihen um je ein Musterfeld 4, 4' versetzt, sodass sich bei vorhandenen Musterfeldern 4, 4' jeweils ein Musterfeld 4 aus der einen Reihe neben einem Musterfeld 4' aus der benachbarten Reihe befindet.

Bei der in Fig. 1 bis Fig. 3 gezeigten Ausführungsform des Musters 2 verlaufen die Mikrorippen 3, 3' in den Musterfeldern 4, 4' analog einer regelmäßigen Rechteckwelle mit längeren Abschnitten 6a (Fig. 3) und diese verbindenden kürzeren Abschnitten 6b (Fig. 3) . Bei der gezeigten Ausführung weisen die Mikrorippen 3, 3' innerhalb jedes Musterfeldes 4, 4' fünf parallel zueinander verlaufende Abschnitte 6a auf, welche in den Musterfeldern 4 parallel zur Erstreckungsrichtung der Reihen, in den Musterfeldern 4' im rechten Winkel zur Erstreckungsrichtung der Reihen verlaufen. Die Mikrorippenabschnitte 5 verbinden in der Erstreckungsrichtung der Reihen verlaufend die Enden der jeweils äußeren längeren Abschnitte 6a.

Bei der in Fig. 4 und Fig. 5 gezeigten Ausführungsform enthält das Muster 2' Musterfelder 4 mit Mikrorippen 3, welche ähnlich zu jenen gemäß der ersten Ausführungsform entlang einer Rechteckwelle verlaufen, im Beispiel mit drei längeren Abschnitten 6a und zwei kürzeren, die längeren Abschnitte 6a verbindenden Abschnitten 6b. In den Musterfeldern 4' verlaufen die Mikrorippen 3' entlang von diagonal in den Musterfeldern 4' ausgebildeten Mäanderstrukturen. Bei der gezeigten Ausführungsform besteht diese Mäanderstruktur aus Schleifen mit 180°-Umkehrung mit fünf parallel zueinander und schräg über die Rechteckform des mittigen Flächenbereiches der Musterfelder 4' verlaufenden Abschnitten 6'a, die über Abschnitte 6'b, die in der Erstreckungsrichtung der Reihen verlaufen, miteinander verbunden sind. Wie bereits erwähnt, weisen sämtliche Musterfelder 4 und sämtliche Musterfelder 4' jeweils übereinstimmende Abmessungen auf. Beim gezeigten Ausführungsbeispiel ist dabei die Länge I der Musterfelder 4' größer, beispielsweise um 1,00 mm bis 2,00 mm größer, als die Länge der Musterfelder 4. Auch im Muster 2' sind in nebeneinander verlaufenden Reihen die Musterfelder 4, 4' gegeneinander versetzt, sodass, sofern im Muster 2' vorgesehen, jeweils ein Musterfeld 4 zentrisch neben einem Musterfeld 4' positioniert ist.

Muster gemäß der Erfindung können ferner derart gestaltet sein, dass die parallel zueinander verlaufenden Reihen diagonal oder beliebig schräg über die Seitenwand verlaufen.

### Bezugszeichenliste

- 1: Seitenwand
- 2, 2': Muster
- 3, 3', 3": Mikrorippe
- 4, 4': Musterfeld
- 5: Mikrorippenabschnitt
- 6a, 6b, 6'a, 6'b: Abschnitt
- 7: Leerfeld
- 8: Randbereich
- B, b: Breite
- l: Länge
- R: Pfeil (radial Richtung)
- U: Pfeil (Umfangsrichtung)

## Patentansprüche

1. Fahrzeugluftreifen mit Seitenwänden (1) mit einem auf zumindest einer Seitenwand (1) ausgebildeten, dekorierenden, beispielsweise bildhaft gestalteten Muster (2, 2'), welches sich über einen Umfangsabschnitt der Seitenwand (1) erstreckt und schachbrettartig angeordnet zwei Arten von rechteckigen Musterfeldern (4, 4') aufweist, welche in nebeneinander und weitgehend zueinander parallel angeordneten, weitgehend gerade verlaufenden und konstant breiten Reihen verlaufen und innerhalb der Reihen einander abwechseln, wobei die Musterfelder (4, 4') in nebeneinander verlaufenden Reihen gegeneinander versetzt sind, sodass ein Musterfeld (4') der einen Art in der einen Reihe einem Musterfeld (4') der anderen Art in der benachbarten Reihe zugeordnet ist, wobei in den Musterfeldern (4, 4') jeweils eine Mikrorippe (3, 3'), insbesondere mäander- oder rechteckwellenförmig verlaufend, ausgebildet ist und sich die beiden Arten von Musterfeldern (4, 4') durch den Verlauf der Mikrorippen (3, 3') voneinander unterscheiden,
**dadurch gekenzeichnet**,
dass zur Bildung des Musters (2, 2') innerhalb von Reihen am Platz eines Musterfeldes oder mehrerer Musterfelder (4, 4') jeweils ein den innerhalb einer Reihe vorgesehenen abwechselnden Verlauf der zwei Arten von rechteckigen Musterfeldern (4, 4') unterbrechendes Leerfeld (7) mit unstrukturierter bzw. glatter Außenfläche enthalten ist, wobei ausschließlich die Mikrorippen (3, 3') von innerhalb einer Reihe unmittelbar aufeinanderfolgenden Musterfeldern (4, 4') einen durchgehenden Mikrorippenzug bildend miteinander verbunden sind.

2. Fahrzeugluftreifen nach Anspruch 1, **dadurch gekennzeichnet, dass** die in einer Reihe einander benachbarten Musterfelder (4, 4') jeweils einen Randbereich (8) mit einer Mindestbreite von 0,10 mm aufweisen, wobei diese Randbereiche (8) von einem Mikrorippenabschnitt (5) durchquert sind, der die Mikrorippen (3, 3') der in einer Reihe benachbarten Musterfelder (4, 4') miteinander verbindet, wobei die Randbereiche (8) ansonsten frei von Mikrorippen sind.

3. Fahrzeugluftreifen nach Anspruch 1 oder 2, **dadurch gekennzeichnet, dass** das Muster (2, 2') zumindest eine Reihe aufweist, in welcher ein oder mehrere einzelne Musterfeld(er) (4, 4') enthalten ist bzw. sind.

4. Fahrzeugluftreifen nach einem der Ansprüche 1 bis 3, **dadurch gekennzeichnet, dass** die Mikrorippen (3, 3') in den Musterfeldern (4, 4'), den innerhalb des Randbereiches (8) zur Verfügung stehenden Flächenbereich ausnützend, mäander- oder rechteckwellenförmig verlaufen.

5. Fahrzeugluftreifen nach einem der Ansprüche 1 bis 4, **dadurch gekennzeichnet, dass** innerhalb des Musters (2, 2') die Musterfelder (4, 4') jeder der beiden Arten von Musterfeldern (4, 4') untereinander jeweils übereinstimmende Abmessungen aufweisen.

6. Fahrzeugluftreifen nach einem der Ansprüche 1 bis 5, **dadurch gekennzeichnet, dass** innerhalb des Musters (2, 2') sämtliche Musterfelder (4, 4') übereinstimmende Abmessungen aufweisen.

7. Fahrzeugluftreifen nach einem der Ansprüche 1 bis 6, **dadurch gekennzeichnet, dass** die Musterfelder (4, 4') eine Größe im Bereich von 3,00 mm x 3,00 mm bis 9,00 mm x 9,00 mm aufweisen.

8. Fahrzeugluftreifen nach einem der Ansprüche 1 bis 7, **dadurch gekennzeichnet, dass** innerhalb des Musters (2) sämtliche Musterfelder (4, 4') quadratisch sind.

9. Fahrzeugluftreifen nach einem der Ansprüche 1 bis 8, **dadurch gekennzeichnet, dass** innerhalb des Musters (2) die Reihen von Musterfeldern (4, 4') in radialer Richtung der Seitenwand (1) verlaufen.

10. Fahrzeugluftreifen nach einem der Ansprüche 1 bis 8, **dadurch gekennzeichnet, dass** innerhalb des Musters (2') die Reihen von Musterfeldern (4, 4') in Umfangrichtung der Seitenwand (1) verlaufen.

11. Fahrzeugluftreifen nach einem der Ansprüche 1 bis 10, **dadurch gekennzeichnet, dass** die Mikrorippen (3, 3') in den Musterfeldern (4, 4') im Querschnitt kuppelförmig sind und eine maximale Höhe sowie ein Breite an ihrer Basis von 0,20 mm bis 0,40 mm aufweisen.

12. Fahrzeugluftreifen nach einem der Ansprüche 1 bis 11, **dadurch gekennzeichnet, dass** sämtliche Musterfelder (4, 4') innerhalb eines Musters (2, 2') Mikrorippen (3, 3') gleicher Gestaltung und Abmessungen aufweisen.

## Claims

1. Pneumatic vehicle tyre having sidewalls (1) with a decorative, for example pictorial, pattern (2, 2'), which is formed on at least one sidewall (1), extends over a circumferential portion of the sidewall (1) and has two types of rectangular pattern fields (4, 4') which are arranged like a chequerboard, run in rows arranged adjacent to one another and largely parallel to one another, running largely in a straight line and of a constant width, and alternate with one another within the rows, wherein the pattern fields (4, 4') are offset from one another in rows running adjacent to one another, so that a pattern field (4') of the one type in the one row is associated with a pattern field (4') of the other type in the adjacent row, wherein a microrib (3, 3') is formed in each of the pattern fields (4, 4'), in particular running in a meandering or rectangular wave form, and the two types of pattern fields (4, 4') differ from one another by the course run by the microribs (3, 3'),
**characterized**
**in that**, to form the pattern (2, 2'), contained within rows there is at the location of a pattern field or a plurality of pattern fields (4, 4') in each case an empty field (7), having an unstructured or smooth outer surface, interrupting the alternating course run by the two types of rectangular pattern fields (4, 4') provided within a row, wherein only the microribs (3, 3') of pattern fields (4, 4') directly following one another within a row are connected to one another, forming a continuous series of microribs.

2. Pneumatic vehicle tyre according to Claim 1, **characterized in that** the pattern fields (4, 4') adjacent to one another in a row have in each case a border region (8) with a minimum width of 0.10 mm, wherein these border regions (8) are crossed by a microrib portion (5) which connects the microribs (3, 3') of the pattern fields (4, 4') adjacent in a row to one another, wherein the border regions (8) are otherwise free from microribs.

3. Pneumatic vehicle tyre according to Claim 1 or 2, **characterized in that** the pattern (2, 2') has at least one row in which one or more individual pattern field(s) (4, 4') is or are contained.

4. Pneumatic vehicle tyre according to one of Claims 1 to 3, **characterized in that** the microribs (3, 3') in the pattern fields (4, 4') run in a meandering or rectangular wave form, utilizing the surface area available within the border region (8).

5. Pneumatic vehicle tyre according to one of Claims 1 to 4, **characterized in that** within the pattern (2, 2') the pattern fields (4, 4') of each of the two types of pattern fields (4, 4') have dimensions that coincide with one another in each case.

6. Pneumatic vehicle tyre according to one of Claims 1 to 5, **characterized in that** within the pattern (2, 2') all of the pattern fields (4, 4') have coinciding dimensions.

7. Pneumatic vehicle tyre according to one of Claims 1 to 6, **characterized in that** the pattern fields (4, 4') have a size in the range from 3.00 mm x 3.00 mm to 9.00 mm x 9.00 mm.

8. Pneumatic vehicle tyre according to one of Claims 1 to 7, **characterized in that** within the pattern (2) all of the pattern fields (4, 4') are square.

9. Pneumatic vehicle tyre according to one of Claims 1 to 8, **characterized in that** within the pattern (2) the rows of pattern fields (4, 4') run in the radial direction of the sidewall (1).

10. Pneumatic vehicle tyre according to one of Claims 1 to 8, **characterized in that** within the pattern (2') rows of pattern fields (4, 4') run in the circumferential direction of the sidewall (1).

11. Pneumatic vehicle tyre according to one of Claims 1 to 10, **characterized in that** the microribs (3, 3') in the pattern fields (4, 4') are dome-shaped in cross section and have a maximum height and a width at their base of 0.20 mm to 0.40 mm.

12. Pneumatic vehicle tyre according to one of Claims 1 to 11, **characterized in that** all of the pattern fields (4, 4') within a pattern (2, 2') have microribs (3, 3') of the same design and dimensions.

## Revendications

1. Pneumatique de véhicule avec des flancs (1) avec un motif décoratif (2, 2') réalisé sur au moins un flanc (1), par exemple sous forme d'image, qui s'étend sur une section périphérique du flanc (1) et présente, agencés en échiquier, deux types de champs de motif rectangulaires (4, 4') qui s'étendent en rangées agencées les unes à côté des autres et essentiellement parallèlement entre elles, s'étendant essentiellement de manière rectiligne et de largeur constante, et qui alternent à l'intérieur des rangées, les champs de motif (4, 4') étant décalés les uns par rapport aux autres dans des rangées s'étendant les unes à côté des autres, de telle sorte qu'un champ de motif (4') d'un type dans une rangée est associé à un champ de motif (4') de l'autre type dans la rangée voisine, une micro-nervure (3, 3'), s'étendant notamment en forme de méandres ou d'ondulations rectangulaires, étant respectivement réalisée dans les champs de motif (4, 4') et les deux types de champs de motif (4, 4') se distinguant l'un de l'autre par le tracé des micro-nervures (3, 3'),
**caractérisé en ce que**
pour former le motif (2, 2'), un champ vide (7) avec une surface extérieure non structurée ou lisse, interrompant le tracé alterné des deux types de champs de motif rectangulaires (4, 4') prévu à l'intérieur d'une rangée, est contenu respectivement à l'intérieur de rangées à l'emplacement d'un champ de motif ou de plusieurs champs de motif (4, 4'), les micro-nervures (3, 3') de champs de motif (4, 4') se succédant directement à l'intérieur d'une rangée étant exclusivement reliées entre elles en formant un train de micro-nervures continu.

2. Pneumatique de véhicule selon la revendication 1, **caractérisé en ce que** les champs de motif (4, 4') voisins les uns des autres dans une rangée présentent chacun une zone de bordure (8) d'une largeur minimale de 0,10 mm, ces zones de bordure (8) étant traversées par une section de micro-nervure (5) qui relie les micro-nervures (3, 3') des champs de motif (4, 4') voisins dans une rangée, les zones de bordure (8) étant par ailleurs exemptes de micro-nervures.

3. Pneumatique de véhicule selon la revendication 1 ou 2, **caractérisé en ce que** le motif (2, 2') présente au moins une rangée dans laquelle un ou plusieurs champs de motif individuels (4, 4') sont contenus.

4. Pneumatique de véhicule selon l'une quelconque des revendications 1 à 3, **caractérisé en ce que** les micro-nervures (3, 3') s'étendent en forme de méandres ou d'ondulations rectangulaires dans les champs de motif (4, 4'), en utilisant la zone de surface disponible à l'intérieur de la zone de bordure (8).

5. Pneumatique de véhicule selon l'une quelconque des revendications 1 à 4, **caractérisé en ce qu'**à l'intérieur du motif (2, 2'), les champs de motif (4, 4') de chacun des deux types de champs de motif (4, 4') présentent des dimensions respectives qui concordent entre elles.

6. Pneumatique de véhicule selon l'une quelconque des revendications 1 à 5, **caractérisé en ce qu'**à l'intérieur du motif (2, 2'), tous les champs de motif (4, 4') présentent des dimensions concordantes.

7. Pneumatique de véhicule selon l'une quelconque des revendications 1 à 6, **caractérisé en ce que** les champs de motif (4, 4') présentent une taille dans la plage de 3,00 mm x 3,00 mm à 9,00 mm x 9,00 mm.

8. Pneumatique de véhicule selon l'une quelconque des revendications 1 à 7, **caractérisé en ce qu'**à l'intérieur du motif (2), tous les champs de motif (4, 4') sont carrés.

9. Pneumatique de véhicule selon l'une quelconque des revendications 1 à 8, **caractérisé en ce qu'**à l'intérieur du motif (2), les rangées de champs de motif (4, 4') s'étendent dans la direction radiale du flanc (1).

10. Pneumatique de véhicule selon l'une quelconque des revendications 1 à 8, **caractérisé en ce qu'**à l'intérieur du motif (2'), les rangées de champs de motif (4, 4') s'étendent dans la direction circonférentielle du flanc (1).

11. Pneumatique de véhicule selon l'une quelconque des revendications 1 à 10, **caractérisé en ce que** les micro-nervures (3, 3') dans les champs de motif (4, 4') sont en forme de dôme en section transversale et présentent une hauteur maximale et une largeur à leur base de 0,20 mm à 0,40 mm.

12. Pneumatique de véhicule selon l'une quelconque des revendications 1 à 11, **caractérisé en ce que** tous les champs de motif (4, 4') à l'intérieur d'un motif (2, 2') présentent des micro-nervures (3, 3') de même configuration et de mêmes dimensions.
